(19) Europäisches Patentamt
European Patent Office
Office européen des brevets

(11) **EP 3 219 043 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **15795111.2**

(22) Anmeldetag: **30.10.2015**

(51) Int Cl.:
**H04L 9/00** (2006.01)     **H04L 9/06** (2006.01)

(86) Internationale Anmeldenummer:
**PCT/EP2015/002223**

(87) Internationale Veröffentlichungsnummer:
**WO 2016/074776 (19.05.2016 Gazette 2016/20)**

(54) **GEHÄRTETE WHITE BOX IMPLEMENTIERUNG 1**

HARDENED WHITE BOX IMPLEMENTATION 1

IMPLÉMENTATION EN BOÎTE BLANCHE DURCIE 1

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2014 DE 102014016548**

(43) Veröffentlichungstag der Anmeldung:
**20.09.2017 Patentblatt 2017/38**

(73) Patentinhaber: **Giesecke+Devrient Mobile Security GmbH
81677 München (DE)**

(72) Erfinder:
• **DREXLER, Hermann
  80337 München (DE)**
• **BAUER, Sven
  85591 Vaterstetten (DE)**
• **PULKUS, Jürgen
  80469 München (DE)**

(56) Entgegenhaltungen:
**WO-A2-2008/119901     US-A1- 2012 002 807**

• **Alex Biryukov ET AL: "A Toolbox for Cryptanalysis: Linear and Affine Equivalence Algorithms" In: "Advances in Cryptology - EUROCRYPT 2003", 1. Januar 2003 (2003-01-01), Springer Berlin Heidelberg, Berlin, Heidelberg, XP055046205, ISBN: 978-3-54-014039-9 Bd. 2656, Seiten 33-50, DOI: 10.1007/3-540-39200-9_3, section 3, 4**
• **JOPPE W BOS ET AL: "Differential Computation Analysis: Hiding your White-Box Designs is Not Enough", INTERNATIONAL ASSOCIATION FOR CRYPTOLOGIC RESEARCH,, Bd. 20150731:144809, 31. Juli 2015 (2015-07-31), Seiten 1-22, XP061018972, [gefunden am 2015-07-31]**

**Beschreibung**

Gebiet der Erfindung

Die Erfindung betrifft allgemein das technische Gebiet des Schützens von kryptographischen Algorithmen gegen Angriffe mittels White Box Kryptograhie. Genauer betrifft die Erfindung eine Prozessor-Einrichtung mit einer White Box Implementierung eines kryptographischen Algorithmus, insbesondere einer Block-Chiffre, insbesondere des DES oder AES.

Hintergrund der Erfindung

Unter einer Prozessor-Einrichtung im Sinn der Erfindung wird ein Gerät oder sonstiger Gegenstand mit einem Prozessor verstanden, beispielsweise ein mobiles Endgerät, wie z.B. ein Smartphone. Mehr und mehr werden auf mobilen Endgeräten, beispielsweise Smartphones, Softwareapplikationen - kurz Apps genannt - genutzt, um kryptographisch gesicherte digitale Transaktionen durchzuführen, beispielsweise zum bargeldlosen Bezahlen an einem NFC-Terminal oder zum Kauf einer Ware oder einer Dienstleistung bei einem Online-Versandhändler. Weiter werden auf mobilen Endgeräten wie z.B. Smartphones zunehmend Softwareapplikationen für kryptographische Dienste wie z.B. Sprachverschlüsselung oder Datenverschlüsselung genutzt. Die auf dem Prozessor des Smartphone implementierte Softwareapplikation interagiert zur Durchführung der Transaktion bzw. des Dienstes mit einem Terminal bzw. Server. Kryptographische Teilaufgaben der Softwareapplikationen wie z.B. Verschlüsselung, Entschlüsselung, Signaturbildung oder Signaturverifizierung werden durch Implementierungen kryptographischer Algorithmen durchgeführt. Durch den kryptographischen Algorithmus verwendete sicherheitskritische Daten, z.B. PINs, Passwörter, kryptographische Schlüssel etc. werden gesichert für die Prozessor-Einrichtung bereitgestellt. Traditionell werden sicherheitskritischen Daten, um sie vor einem Angriff durch unbefugte Person zu schützen, durch (Grey Box) Kryptographie gesichert. Hierzu werden die Daten auf einem Hardware-technisch eigenständigen Sicherheitselement des mobilen Endgeräts bereitgestellt, beispielsweise einer aus dem mobilen Endgerät herausnehmbaren SIM-Karte.

Ein alternativer Ansatz, der insbesondere auch für mobile Endgeräte anwendbar ist, die kein eigenständiges Sicherheitselement haben, basiert auf der White Box Kryptographie. Bei einer White Box Implementierung eines kryptographischen Algorithmus wird versucht, die sicherheitskritischen Daten, insbesondere geheime kryptographische Schlüssel, derart in der Implementierung zu verbergen, dass ein Angreifer, der vollen Zugriff auf die Implementierung hat, nicht dazu in der Lage ist, die sicherheitskritischen Daten aus der Implementierung zu extrahieren. Eine White Box Implementierung des AES-Kryptoalgorithmus (AES = Advanced Encryption Standard) ist beispielsweise aus der Veröffentlichung [1] "A Tutorial on White-box AES" von James A. Muir, Cryptology ePrint Archive, Report 2013/104 bekannt. Ebenso werden White Box Implementierungen von kryptographischen Algorithmen bzw. Routinen kommerziell vertrieben.

Eine ideale White Box Implementierung eines Krypto-Algorithmus hält sicherheitskritische Daten wie kryptographische Schlüssel so verborgen, dass sie durch einen Angriff nicht ermittelbar sind.

In der Patentanmeldung DE 102014016548.5 der Anmelderin der vorliegenden Patentanmeldung ist ein Verfahren zum Testen einer auf einem Prozessor ausführbaren White Box Implementierung, eines kryptographischen Algorithmus, z.B. AES, beschrieben, mit dem es den Erfindern gelungen ist, sicherheitskritische Daten durch einen Angriff zu ermitteln, was gemäß dem Konzept der White Box eigentlich nicht möglich sein sollte. Unter diesem Aspekt sind die getesteten White Box Implementierung auf Grund ihrer Angreifbarkeit definitionsgemäß nicht mehr perfekt White Box, werden aber auf Grund ihrer Zielsetzung perfekt zu sein nachfolgend weiterhin als White Box Implementierungen bezeichnet.

102014016548.5 beschreibt genauer ein Testverfahren bei einer White Box Implementierung, die mittels eines geheimen Schlüssels aus einem Plaintext einen Ciphertext erzeugt und auf dem Prozessor in Form von Maschinenbefehlen vorliegt, wobei der Prozessor wenigstens ein Register umfasst. Dabei umfasst das Verfahren die folgenden Schritte: (a) das Einspeisen eines Plaintexts einer Vielzahl von Plaintexten in die White Box-Implementierung; (b) das schrittweise Auslesen und Abspeichern des Inhalts des wenigstens einen Registers des Prozessors beim schrittweise Abarbeiten der Maschinenbefehle der White Box Implementierung, wobei beim schrittweise Abarbeiten der Maschinenbefehle der White Box Implementierung Zwischenergebnisse erzeugt werden können; (c) das N-malige Wiederholen der Schritte (a) und (b) mit einem weiteren Plaintext der Vielzahl von Plaintexten; und (d) das statistische Auswerten der Inhalte der Register und der Plaintexte, der Zwischenergebnisse und/oder der aus den Plaintexten erzeugten Ciphertexte, indem nach Korrelationen zwischen den Inhalten der Register und den Plaintexten, den Zwischenergebnissen und/oder den Ciphertexten gesucht wird, um den geheimen Schlüssel zu ermitteln.

Überraschenderweise hat sich bei den Untersuchungen der Erfinder gezeigt, dass sich bei kommerziell erhältlichen unter der Bezeichnung White Box Implementierung vertriebenen Implementierungen von kryptographischen Algorithmen der geheime Schlüssel mittels des in 102014016548.5 beschriebenen Verfahrens ableiten lässt.

In der Fachveröffentlichung [3] "Differential Computation Analysis: Hiding your White-Box Designs is Not Enough", J.W. Bos, Ch. Hubain, W. Michiels, and Ph. Teuwen, eprint.iacr.org/2015/753, der Firma NXP ist ein ähnliches Testverfahren offenbart wie in der oben angeführten Patentanmeldung 102014016548.5, mit dem sich ebenfalls aus einer White Box Implementierung eines Kryptoalgorithmus der geheime Schlüssel mit statistischen Methoden ermitteln ließ.

In der Patentanmeldung 102014016548.5 wird weiter eine Handlungsanleitung für ein Verfahren zum Härten der auf einem Prozessor ausführbaren White Box Implementierung eines kryptographischen Algorithmus bereitgestellt. Dabei ist, um das Härten zu erzielen, die White Box Implementierung derart ausgestaltet, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden. Das Verfahren umfasst den Schritt, dass die Lookup-Tabelle derart statistisch permutiert wird, dass die einzelnen Bits der permutierten Lookup-Tabelle im Wesentlichen nicht mit den Bits der Lookup-Tabelle korrelieren. Mit anderen Worten: die Lookup-Tabelle T wird derart mittels einer invertierbaren Abbildung f (dort als Permutation P bezeichnet) statistisch permutiert, dass die einzelnen Bits der permutierten Lookup-Tabelle T'(x) = f(T(x)) bei zufällig variierendem Input x nicht mit den Bits T(x) korrelieren. Diese Implementierung entspricht dem Oberbegriff von Anspruch 1.

Der Erfindung liegt die Aufgabe zugrunde, eine Prozessor-Einrichtung mit einer Implementierung eines kryptographischen Algorithmus anzugeben, die aufbauend auf einer wie der in 102014016548.5 angegebenen oder einer vergleichbaren Implementierung speziell gehärtet ist, indem in der Implementierung Ausgabewerte von Rechenschritten (z.B. S-Box-Operationen) nicht mit Ausgabewerten, wie sie bei ungeschützten Implementierungen erwartet werden würden, korreliert sind, so dass auch mittels auf Seitenkanal-Ausgaben angewandter statistischer Methoden keine geheime Information aus dem Algorithmus gewonnen werden kann. Insbesondere sollen spezielle Implementierungsdetails angegeben werden, mittels derer eine speziell gehärtete Implementierung erreicht werden kann.

### Zusammenfassung der Erfindung

Die Aufgabe wird durch eine Prozessor-Einrichtung nach Anspruch 1 gelöst. Ausführungsformen der Erfindung sind in den abhängigen Ansprüchen angegeben.

Auf der erfindungsgemäßen Prozessor-Einrichtung ist eine ausführbare White Box maskierte Implementierung eines kryptographischen Algorithmus implementiert. Der Algorithmus ist eingerichtet, unter Verwendung eines geheimen Schlüssels K aus einem Eingabetext einen Ausgabetext zu erzeugen. Die Implementierung umfasst einen im Algorithmus enthaltenen implementierten Rechenschritt S, durch den Eingabewerte x auf Ausgabewerte s = S[x] abgebildet werden, und der mittels einer invertierbaren Funktion f zu einem maskierten Rechenschritt T' White Box maskiert ist.

Die Erfindung ist dadurch gekennzeichnet, dass die invertierbare Funktion f eine auf den Rechenschritt S angewandte affine Abbildung A umfasst, die dazu eingerichtet ist, Ausgabewerte w von A zu erzeugen, indem A auf Ausgabewerte s des Rechenschritts S und zusätzlich auf einen oder mehrere von den Ausgabewerten s des Rechenschritts S statistisch unabhängige Verschleierungswerte y angewendet wird, so dass gilt w = A(S[x], y) = A(s, y). Die affine Abbildung A ist weiter so gestaltet, dass jedes Bit in den Ausgabewerten w der affinen Abbildung A von mindestens einem Bit aus den Verschleierungswerten y abhängt, wodurch erreicht wird, dass die Ausgabewerte w der affinen Abbildung A statistisch ausgeglichen sind.

Indem die Funktion f unter Verwendung einer derart gestalteten affinen Abbildung A konstruiert wird, wird erzielt, dass die einzelnen Bits des maskierten Rechenschrittes T' im Wesentlichen nicht mit den Bits des unmaskierten Rechenschrittes S korrelieren. Somit lassen sich aus der Aufnahme von Seitenkanal-Ausgaben des Rechenschritts und Anwendung statistischer Methoden auf die Seitenkanal-Ausgaben keine Informationen über den kryptographischen Schlüssel gewinnen.

Die erfindungsgemäße White Box maskierte Implementierung zeichnet sich also dadurch aus, dass sie durch eine gezielte Konstruktion der zum White Box Maskieren des Rechenschritts S verwendeten Abbildung f gehärtet gestaltet ist. Das spezielle Härten wird durch die wie oben beschrieben gestaltete affine Abbildung A erreicht.

Daher ist gemäß Anspruch 1 eine Prozessor-Einrichtung mit einer speziell gehärteten Implementierung geschaffen, bei der Ausgabewerte von Rechenschritten (Zwischenergebnisse) so geschützt sind, dass auch mittels statistischer Methoden keine geheime Information aus dem Algorithmus gewonnen werden kann.

→ Unteransprüche

Die affine Abbildung A umfasst wahlweise eine lineare Abbildung, die durch eine Matrix MA gebildet ist, die in Spalten und Zeilen organisiert ist, wobei die Ausgabewerte s des Rechenschritts S und die statistisch unabhängigen Verschleierungswerte y in der Matrix MA getrennten Spalten zugeordnet sind. Eine solche getrennte Anordnung erhöht die Übersichtlichkeit.

Wahlweise ist in jeder Zeile einer derartigen Matrix MA mit getrennten Spalten für Ausgabewerte s des Rechenschritts S und die statistisch unabhängigen Verschleierungswerte y in mindestens einer der Spalten mit statistisch unabhängigen Werten y ein von Null unterschiedlicher Wert enthalten. Hierdurch ist sichergestellt, dass in jeder Zeile eines Ausgabe-Vektors w, der durch die Anwendung der Matrix MA auf einen Eingabe-Vektor (s,y) erzeugt wird, zumindest ein Verschleierungswert y eingeht. Andernfalls könnte es vorkommen, dass in einer Zeile des Ausgabe-Vektors w die Verschleierungswerte y herausfallen, da alle zu y gehörigen Matrixwerte a der Matrix MA in dieser Zeile Null sind.

Wahlweise wird für die Durchführung des Implementierens des White Box maskierten Rechenschritts T' eine den Rechenschritt S darstellende Look-Up Tabelle STab[x] dargestellt. In diesem Fall werden die Verschleierungswerte y separat bereitgestellt. Alternativ wird eine den Rechenschritt S und die Verschleierungswerte y darstellende Look-Up Tabelle STab[x,y] bereitgestellt, so dass ein separates Bereitstellen der Verschleierungswerte entfällt.

Wahlweise ist der White Box maskierte Rechenschritt T' durch eine White Box maskierte Look-Up Tabelle T'Tab [x, y] dargestellt, in der Werte f(s, y) eingetragen sind, insbesondere A(s, y).

Wahlweise umfasst die Implementierung zusätzlich eine weitere, auf Eingabewerte x des Rechenschritts S, oder auf Eingabewerte x des Rechenschritts S und auf Verschleierungswerte y gemäß $g^{-1}(x)$ bzw. $g^{-1}(x, y)$ anzuwendende invertierbare Funktion g.

Wahlweise ist als Algorithmus eine Block-Chiffre mit mehreren Runden vorgesehen ist, insbesondere DES oder AES, und als Rechenschritt S:

- eine oder mehrere SBox-Operationen oder eine oder mehrere inverse SBox-Operationen, jeweils einer Runde; oder
- eine Kombination T aus einer oder mehreren SBox-Operation S oder einer oder mehreren inversen SBox-Operation, jeweils einer Runde, mit ein oder mehreren weiteren Operationen der Runde.

In einer Prozessor-Einrichtung mit Algorithmus DES ist bzw. sind als Eingabewert x wahlweise entweder ein oder mehrere expandierte rechte Eingangs-Bits r'i (r'1 | r'2 | ...) einer Runde, oder eine Verknüpfung (x = r'1 XOR k1 | r'2 XOR k2 | ....) eines oder mehrerer expandierter rechter Eingangs-Bits r'i einer Runde mit einem bzw. mehreren Schlüsselbits ki vorgesehen. Im Fall, dass im Eingabewert kein Schlüsselbit enthalten ist, kann der Schlüssel für den DES beispielsweise in eine kombinierte Operation integriert sein, in welche auch die S-Box-Operation integriert ist.

Bei Algorithmus DES ist bzw. sind wahlweise als Verschleierungswert y ein oder mehrere linke Eingangs-Bit li der Runde vorgesehen.

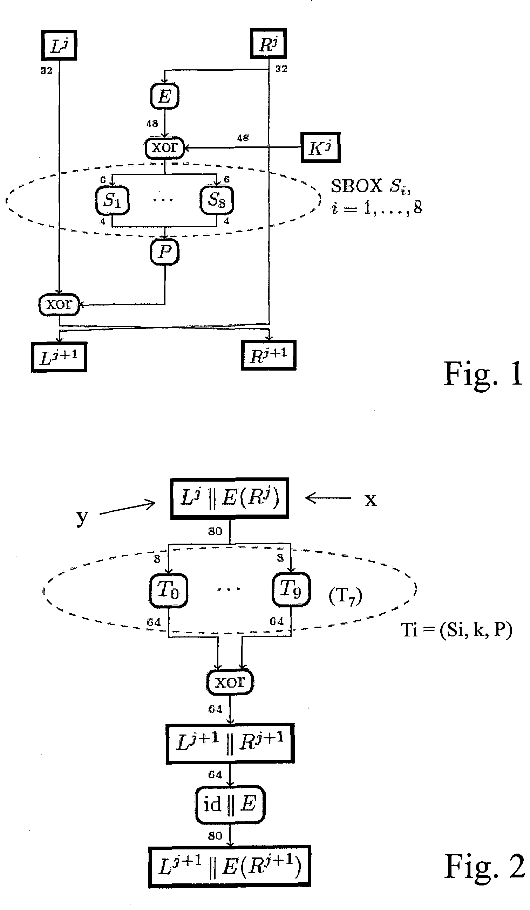

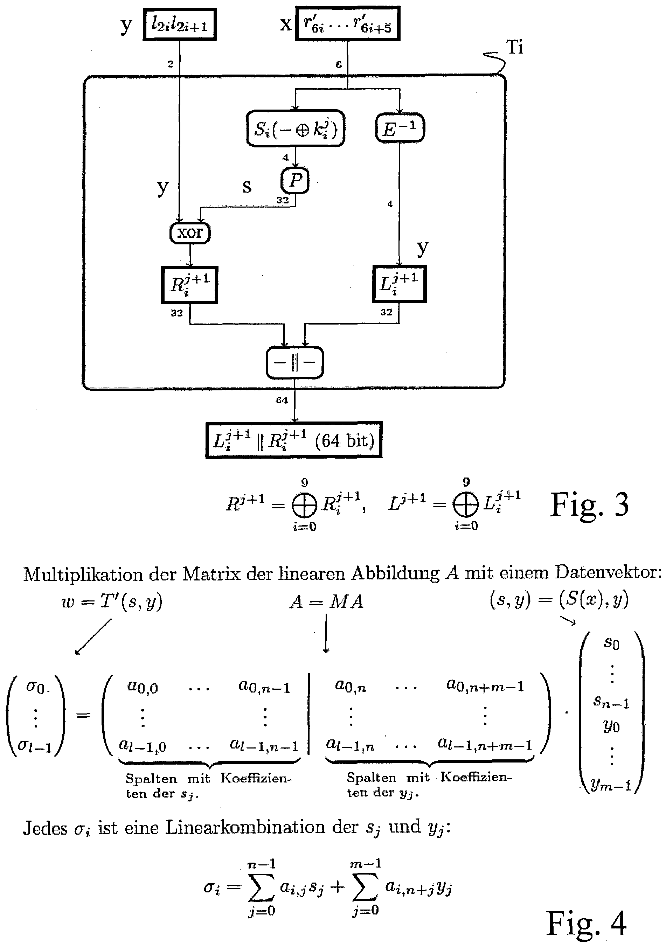

Bei Algorithmus DES sind weiter wahlweise die Verschleierungswerte y mittels einer Funktion V aus ein oder mehreren linken Eingangs-Bits li der Runde oder/und aus ein oder mehreren expandierten rechten Eingangs-Bit r'i der Runde berechnet sind. In der weiter unten detailliert behandelten Zeichnung zeigt Fig. 1 eine DES-Darstellung, bei der linke Eingangsbits li als Verschleierungswerte verwendet werden. Fig. 3 zeigt eine DES-Darstellung, bei der linke und expandierte rechte Eingangsbits r'i als Verschleierungswerte verwendet werden.

Bei Algorithmus DES mit einem Rechenschritt S, der als eine kombinierte Operation T mit weiteren Operationen implementiert ist, umfassen wahlweise die weiteren Operationen eine oder mehrere der folgenden: Permutation P; Expansion E; Addition von linken und rechten Eingangs-Bits 1, r oder linken und expandierten rechten Eingangsbits 1, r'.

Falls als Algorithmus AES vorgesehen ist, ist als Eingabewert x wahlweise ein Eingabewert oder Teil eines Eingabewerts einer AddRoundKey-Operation oder einer SubBytes-Operation oder einer inversen SubBytes-Operation einer AES-Runde vorgesehen.

Bei Algorithmus AES sind wahlweise die Verschleierungswerte y jeweils mittels einer Funktion V berechnet.

Bei Algorithmus AES umfassen wahlweise die weiteren Operationen eine oder mehrere der folgenden: MixColumn-Operation oder ein oder mehrere Teilschritte der MixColumn-Operation oder inverse MixColumn-Operation oder ein oder mehrere Teilschritte der inversen MixColumn-Operation.

Wahlweise sind die Verschleierungswerte y jeweils mittels einer Funktion V aus Bits des Eingabetexts berechnet.

Der Algorithmus weist wahlweise mehrere Runden auf, wobei die Funktion V für jede Runde neu gewählt wird.

Wahlweise ist V eine lineare Abbildung oder eine Hashfunktion.

Wahlweise umfassen die Verschleierungswerte y weiter ein oder mehrere Rausch-Zufallswerte y[x], insbesondere Zufallsbits, welche zumindest einem oder jedem der Ausgabewerte s des Rechenschritts S hinzugefügt werden. Die Rausch-Zufallswerte y[x] werden zunächst zufällig ausgewählt. Anschließend werden die Rausch-Zufallswerte y[x] so abgeändert, dass y[x] und s statistisch unabhängig sind. Streng genommen handelt es sich somit bei y[x] nicht mehr um völlig zufällige Werte, sondern um nachträglich adaptierte Zufallswerte. Mittels dieser nachträglich adaptierten Zufallswerte wird zusätzliches Rauschen (noise) in die Implementierung eingebracht.

Die Rausch-Zufallswerte y[x] sind wahlweise, zusätzlich zu ebenfalls als Verschleierungswerte y verwendeten linken Eingabewerten 1 oder/und rechten Eingabewerten r einer Runde des Algorithmus (z.B. DES oder AES), als weitere Verschleierungswerte vorgesehen.

Wahlweise ist der Rechenschritt S mittels eines Implementierungs-Verfahrens als White Box maskierter Rechenschritt T' auf der Prozessor-Einrichtung implementiert worden. Wahlweise ist der White Box maskierte Rechenschritt T' dadurch in White Box maskierter Form auf der Prozessor-Einrichtung implementiert worden, dass: (i) der (unmaskierte) Rechenschritt S durchgeführt worden ist, um Ausgabewerte s zu erzeugen, und (ii) auf die erzeugten Ausgabewerte s des Rechenschritts S die invertierbare Funktion f angewandt worden ist, und ein hierdurch erzieltes Ergebnis auf der Prozessor-Eichrichtung implementiert worden ist. Beim Anwenden der invertierbaren Funktion f wurde insbesondere die affine Abbildung angewandt.

Wird die Prozessor-Einrichtung in Betrieb genommen und dadurch der kryptographische Algorithmus ausgeführt, z.B. innerhalb einer SoftwareApplikation, dann werden White Box maskierten Operationen T' (z.B. Ti', vgl. insbesondere Ausführungsform aus Fig. 4) ausgeführt. Durch das Ausführen der White Box maskierten Operationen T' werden die Rechenschritte S (insbesondere z.B. die DES-spezifischen S-Box Operationen) in gehärteter White Box maskierter Form ausgeführt. Da in der Prozessor-Einrichtung die Rechenschritte S (z.B. S-Boxen) nicht in direkter Form implementiert sind, sondern lediglich die erfindungsgemäß zu T' White Box maskierten Rechenschritte S, sind Angriffe auf die Prozessor-Einrichtung verhindert oder zumindest erheblich erschwert. Das Gleiche gilt, wenn der Rechenschritt S (z.B. S-Box) in einen kombinierten Rechenschritt T eingebettet ist (vgl. Fig. 2, 3). Auch der kombinierte Rechenschritt T ist nie direkt sondern stets nur in White Box maskierter Form T' in der Prozessor-Einrichtung implementiert.

Kurze Beschreibung der Zeichnungen

Im Folgenden wird die Erfindung an Hand von Ausführungsbeispielen und unter Bezugnahme auf die Zeichnungen näher erläutert, in der zeigen:

Fig. 1 eine DES-Runde in Standard-Darstellung, nach dem Stand der Technik, geeignet als Grundlage der Erfindung;

Fig. 2 eine DES-Runde in einer alternativen Darstellung, mit in Operationen T eingebetteten S-Box-Operationen S, und speziell geeignet als Grundlage der Erfindung;

Fig. 3 eine Detaildarstellung einer einzelnen Operation T in der DES-Runde aus Fig. 2;

Fig. 4 eine White Box Maskierung einer DES-Runde nach Fig. 1, oder nach Fig. 2 und Fig. 3, gemäß Ausführungsformen der Erfindung.

Detaillierte Beschreibung von Ausführungsbeispielen

Fig. 1 zeigt eine DES-Runde, nach dem Stand der Technik. An Hand von Fig. 1 wird aufgezeigt, dass ein Rechenschritt S, wie er der Erfindung zu Grunde gelegt wird, beispielsweise eine S-Box-Operation oder die Gesamtheit der acht S-Boxen einer DES-Runde sein kann. Am Eingang einer DES-Runde werden 64 Bit Eingangsdaten in 32 Bit linke Seite L=lj, j=0,...,31 und 32 Bit rechte Seite R=rj, j=0,...31 aufgeteilt. Die Bits der rechten Seite R werden mittels einer Expansions-Operation zu 48 Bit expandierten Eingangsdaten E=r'j, j=0,...47 der rechten Seite expandiert. Die 48 Bit expandierte Eingangsdaten E werden mit 48 Bit Schlüsseldaten K=kj, j=0,...47 mittels einer XOR-Operation verknüpft zu Eingabewerten xj = rj XOR kj, j=0,...47 für acht S-Boxen S. Jede der acht S-Boxen S = S1, ... S8 verarbeitet sechs Bit Eingabewerte xj zu je vier Bit Ausgabewerten sj. Die vier Bit breiten Ausgabewerte sj der acht S-Boxen S = S1, ... S8 werden einer Permutations-Operation P zugeführt., und die Ausgabewerte der Permutation P werden mit Bits der linken Seite verXORt und der nächsten DES-Runde zugeführt. Bei der Standard DES Implementierung endet die DES Runde hier.

Erfindungsgemäß, und wie in Fig. 4 dargestellt, wird die DES S-Box Si (gestrichelt eingekreister Bereich) auf speziell gehärtete Weise White Box maskiert. Für die White Box Maskierung werden die Ausgabewerte sj der S-Boxen einer erfindungsgemäßen Matrix MA zugeführt, durch welche die lineare Abbildung in der affinen Abbildung A dargestellt ist, gemäß w = f(S[x]) = A(S[x]) = MA(S[x]) (Bemerkung: optional enthält f zusätzlich zu A zudem invertierbare Abbildungen ci, die vorzugsweise angewendet werden, nachdem A angewendet worden ist). Weiter werden der Matrix MA, zusätzlich zu den Ausgabewerten sj der S-Boxen, statistisch unabhängige Werte y zugeführt, beispielsweise zwei oder mehr Bits lj, j=0,...31 der linken Seite der 64 Bit Eingangsdaten am Eingang der DES-Runde. Für die statistisch unabhängigen Werte y gilt a(y) = MA*y + v (v ein Vektor). Um die spezielle Härtung der White Box Maskierung zu erreichen, ist die Matrix MA so gestaltet, dass die zusätzlich zu den S-Box-Ausgabewerten sj eingehenden Werte y statistisch unabhängig sind von den S-Box-Ausgabewerten sj, und dass jedes Bit in den Ausgabewerten w der Matrix MA von mindestens einem Bit aus den Verschleierungswerten y abhängt.

Im Folgenden wird anhand von Fig. 2 und Fig. 3 eine zur Implementierung der Erfindung besonders geeignete einer alternativen Darstellung einer DES-Runde dargelegt, in welcher die für eine DES-Runde spezifischen Operationen S-Box-Operation S und Permutation P in einer kombinierten Operation T zusammengefasst sind. Hierbei wird die White Box Maskierung mit der Abbildung A, oder konkret mit der Matrix MA, auf die kombinierte Operation T, in welcher die S-Box-Operation enthalten ist, angewandt (siehe Fig. 4).

Fig. 2 zeigt eine DES-Runde in einer alternativen Darstellung, speziell geeignet für die Anwendung einer White Box Maskierung gemäß der Erfindung. Am Eingang der DES-Runde werden, zunächst wie gemäß Fig. 1, 64 Bit Eingangsdaten in 32 Bit linke Seite L=lj, j=0,...,31 und 32 Bit rechte Seite R=rj, j=0,...31 aufgeteilt und die Bits der rechten Seite expandiert auf 48 Bit E(R). Bei der alternativen Darstellung aus Fig. 2 werden zwei oder mehr Bits aus den 32 Bit L=lj, j=0,...,31 der linken Seite der Runden-Eingangsdaten als Verschleierungsweite y verwendet. Hierdurch werden bei der Ausführung der DES-Runde die DES-spezifischen acht S-Box-Operationen dadurch ausgeführt, dass eine Mehrzahl von acht oder zehn kombinierten Operationen T = T0, ... T7 bzw. T0, ... T9 durchgeführt wird, in welchen die S-Box-Operationen S = S1, ... S8 mit umfasst sind.

Fig. 3 zeigt die Detailstruktur einer einzelnen kombinierten Operation T = Ti, i = 0, .... 7 (oder ggf. 0, ... 9) aus Fig. 2. (Optional zusätzlich vorhandenes Padding mit Null-Bits und Shifts sind in Fig. 3 zugunsten besserer Übersichtlichkeit weggelassen.) Im Unterschied zu den S-Boxen S der DES-Darstellung aus Fig. 1 sind in den kombinierten Operationen T = Ti aus Fig. 2 und Fig. 3 der Schlüssel kj und die DES-typische Permutation P bereits in die Operation T eingerechnet. Die S-Box mit dem eingerechneten Schlüssel kj ist in Fig. 3 durch das Operations-Kästchen Si(-XORkij) dargestellt, die Permutation durch P. Weiter werden vor dem Rechenschritt S, also vor den S-Box-Operationen S1,... S8, acht (oder zehn) Gesamttabellen T0, ... T7 (oder T0,...T9) erzeugt, in denen jeweils sechs Bit Eingangswerte xj = rj, j=0,...47 (nun nicht mit k verXORt, da die Schlüsselbits kj bereits in S enthalten sind) für die acht S-Boxen S und zwei Bit Verschleierungswerte lj, j=0,...,31 enthalten sind, und bei zehn Gesamttabellen Ti weitere Bits Verschleierungswerte lj, j=0,...,31 enthalten sind. Die zwei (oder mehr) Bit Verschleierungswerte lj werden hierbei nicht durch die S-Boxen verarbeitet. Die je sechs Bit Eingangswerte xj = rj XOR kj werden je durch eine S-Box verarbeitet. Somit liefern die Gesamttabellen Ti Ausgabewerte, die sowohl Ausgangswerte sj der S-Boxen als auch Verschleierungswerte lj enthalten.

Wie in Fig. 4 dargestellt, wird die White Box Maskierung der Implementierung durchgeführt, indem die Ausgabewerte der kombinierten Operationen (Gesamttabellen) Ti der erfindungsgemäßen Matrix MA zugeführt werden, durch welche die erfindungsgemäße affine Abbildung A dargestellt ist. Hierbei werden sowohl die Ausgangswerte S(x) des Rechenschritts S, Bits des Eingangswerts x also Bits rj der rechten Seite, als auch die statistisch unabhängigen Werte y, d.h. die als Verschleierungswerte verwendeten Bits lj der linken Seite des DES-Runden-Eingangswerts, der Matrix MA zugeführt. Ein gesondertes Holen der statistisch unabhängigen Werte y = lj ist hierbei nicht erforderlich, da sie bereits in der kombinierten Operation T enthalten sind. Aus diesem Grund ist die DES-Darstellung aus Fig. 2 zur Implementierung der Erfindung besonders gut geeignet. Das Ergebnis der Maskierung sind White Box maskierte Operationen Ti', i = 0, ... 9 oder i = 0, ... 7. Dieser White Box maskierten Operationen Ti' werden in die Prozessor-Einrichtung implementiert.

In der Ausführungsform aus Fig. 4 ist die in der zur White Box Maskierung verwendeten Abbildung f enthaltene affine Abbildung A als Matrix MA gestaltet, mit Koeffizienten aij, i = 0, ... 1-1, j = 0, ... n+m-1.

Die Matrix MA wird mit dem Eingangs-Vektor (s,y) multipliziert, der S-Box-Ausgangswerte s = S[x] (z.B. Bits r der rechten Seite) und Verschleierungswerte y (z.B. Bits der linken Seite) enthält, um einen Ausgangs-Vektor w zu erzeugen. Die Summenformel in Fig. 4 verdeutlicht diesen Sachverhalt für eine einzelne Zeile i mit den Koeffizienten aij (j=0, ... n+m-1) der Matrix MA, und einen hiermit erzeugten einzelnen Eintrag σi des Ausgangs-Vektors w. Im Eingangs-Vektor (s,y) sind in den oberen n Einträgen die S-Box-Ausgangswerte s und in den unteren m Einträgen die Verschleierungswerte y enthalten. In der Matrix MA sind entsprechend links die mit den S-Box-Ausgangswerte s = s0, ... sn-1 zu multiplizierenden n Koeffizienten aij, j = 0, ... n-1 von MA enthalten. Rechts in der Matrix MA sind die mit den Verschleierungswerten y = y0, ... ym-1 zu multiplizierenden m Koeffizienten aij, j = n, ... n+m-1 von MA enthalten.

Die Matrix MA ist erfindungsgemäß so konstruiert, dass der Effekt erzielt wir, dass die rechte Summe der Summengleichung für σi (Anmerkung: mit σ i sind einzelne Bits von w bezeichnet)

$$\sum_{j=0}^{m-1} a_{i,n+j} y_j$$

für keinen Zeilenindex i, i = 0, ... 1-1 verschwindet. Erreicht wird dieser Effekt dadurch, dass in jeder Zeile i mindestens einer der Koeffizienten ai,n+j, j=0, ... m-1, die mit den Verschleierungswerten y = yj, j=0, ... m-1 zu multiplizieren sind, von Null verschieden ist. Durch den Effekt wird sichergestellt, dass in keiner Zeile i, i = 0, ... 1-1 die Verschleierungswerte y im Ausgabe-Vektor w verschwinden, also in jeder Zeile i im Eintrag wi des Ausgabe-Vektors w zumindest ein Verschleierungswert yj enthalten ist. Dies wiederum hat den weitergehenden Effekt, dass die Ausgabewerte w der affinen Abbildung A statistisch ausgeglichen sind.

Glossar

Allgemein:

S: Rechenschritt, insbesondere DES SBOX oder acht DES S-Boxen, insbesondere bei Standard-Darstellung von DES
T: Operation umfassend Rechenschritt S, bei alternativer DES-Darstellung
T': White Box verschleierter Rechenschritt S, mit S ggf. eingebettet in T
x: Eingabewert in Rechenschritt S (bzw. T)
y: Verschleierungswert
r': expandierte rechte Seite der Eingabe einer Runde
k: Schlüssel
s: Ausgabewert von S (z.B. S-Box)
w: Ausgabewert von T' (maskiertes S)

Im Fall, dass S = DES S-Box oder acht DES S-Boxen:

x = r' XOR k bei Standard-Darstellung von DES
x = r' bei alternativer Darstellung von DES
1 = Bits aus linker Seite der Bits am DES-Rundeneingang (32 Bit)
r = Bits aus rechter Seite der Bits am DES-Rundeneingang (32 Bit)
r' = Bits aus expandierter rechter Seite r am DES-Rundeneingang (48 Bit)

Zitierter Stand der Technik

[1] "A Tutorial on White-box AES", James A. Muir, Cryptology ePrint Archive, Report 2013/104, eprint.iacr.org/2013/104
[2] DE 102014016548.5 (eingereicht am 10.11.2014)
[3] "Differential Computation Analysis: Hiding your White-Box Designs is Not Enough", J.W. Bos, Ch. Hubain, W. Michiels, and Ph. Teuwen, eprint.iacr.org/2015/753, abgerufen am 31.7.2015

**Patentansprüche**

1. Prozessor-Einrichtung mit einer darauf implementierten ausführbaren White Box maskierten Implementierung eines kryptographischen Algorithmus, der eingerichtet ist, unter Verwendung eines geheimen Schlüssels K aus einem Eingabetext einen Ausgabetext zu erzeugen, wobei die Implementierung einen implementierten Rechenschritt S umfasst, durch den Eingabewerte x auf Ausgabewerte s = S[x] abgebildet werden, und der mittels einer invertierbaren Funktion f zu einem White Box maskierten Rechenschritt T' maskiert ist, **dadurch gekennzeichnet, dass**

die invertierbare Funktion f eine auf den Rechenschritt S angewandte affine Abbildung A umfasst, die dazu eingerichtet ist, Ausgabewerte w von A zu erzeugen, indem A auf Ausgabewerte s des Rechenschritts S und zusätzlich auf einen oder mehrere von den Ausgabewerten s des Rechenschritts S statistisch unabhängige Verschleierungswerte y angewendet wird, so dass gilt

$$w = A(S[x], y) = A(s, y);$$

und
die affine Abbildung A weiter so gestaltet ist, dass jedes Bit in den Ausgabewerten w der affinen Abbildung A von mindestens einem Bit aus den Verschleierungswerten y abhängt, wodurch erreicht wird, dass die Ausgabewerte w der affinen Abbildung A statistisch ausgeglichen sind.

2. Prozessor-Einrichtung nach Anspruch 1, wobei die affine Abbildung A eine lineare Abbildung umfasst, die durch eine Matrix MA gebildet ist, die in Spalten und Zeilen organisiert ist, wobei die Ausgabewerte s des Rechenschritts S und die statistisch unabhängigen Verschleierungswerte y in der Matrix MA getrennten Spalten zugeordnet sind.

3. Prozessor-Einrichtung nach Anspruch 2, wobei in jeder Zeile der Matrix MA in mindestens einer der Spalten mit statistisch unabhängigen Werten y ein von Null unterschiedlicher Wert enthalten ist.

4. Prozessor-Einrichtung nach einem der Ansprüche 1 bis 3, wobei für die Durchführung des Implementierens des White Box maskierten Rechenschritts T' eine den Rechenschritt S darstellende Look-Up Tabelle STab[x] oder eine den Rechenschritt S und die Verschleierungswerte y darstellende Look-Up Tabelle STab[x,y] bereitgestellt worden ist.

5. Prozessor-Einrichtung nach einem der Ansprüche 1 bis 4, wobei der White Box maskierte Rechenschritt T' durch eine White Box maskierte Look-Up Tabelle T'Tab [x, y] dargestellt ist, in der Werte f(s, y) eingetragen sind, insbesondere A(s, y).

6. Prozessor-Einrichtung nach einem der Ansprüche 1 bis 5, wobei die Implementierung zusätzlich eine weitere, auf Eingabewerte x des Rechenschritts S, oder auf Eingabewerte x des Rechenschritts S und auf Verschleierungswerte y gemäß $g^{-1}(x)$ bzw. $g^{-1}(x, y)$ anzuwendende invertierbare Funktion g umfasst.

7. Prozessor-Einrichtung nach einem der Ansprüche 1 bis 6, wobei als Algorithmus eine Block-Chiffre mit mehreren Runden vorgesehen ist, insbesondere DES oder AES, und als Rechenschritt S:

- eine oder mehrere SBox-Operationen oder eine oder mehrere inverse SBox-Operationen, jeweils einer Runde; oder
- eine Kombination aus einer oder mehreren SBox-Operation oder einer oder mehreren inversen SBox-Operation, jeweils einer Runde, mit ein oder mehreren weiteren Operationen der Runde.

8. Prozessor-Einrichtung nach Anspruch 7 mit Algorithmus DES, wobei als Eingabewert x entweder ein oder mehrere expandierte rechte Eingangs-Bits r'i (r'1 | r'2 | ...) einer. Runde, oder eine Verknüpfung (x = r'1 XOR k1 | r'2 XOR k2 | ....) eines oder mehrerer expandierter rechter Eingangs-Bits r'i einer Runde mit einem bzw. mehreren Schlüsselbits ki vorgesehen ist / sind; oder / und

- in die Verschleierungswerte y ein oder mehrere linke Eingangs-Bit li der Runde eingehen.

9. Prozessor-Einrichtung nach Anspruch 7 oder 8 mit Algorithmus DES, wobei die Verschleierungswerte y mittels einer Funktion V aus ein oder mehreren linken Eingangs-Bits li der Runde oder/ und aus ein oder mehreren expandierten rechten Eingangs-Bit r'i der Runde berechnet sind, wobei insbesondere V

7

wahlweise eine lineare Abbildung oder eine Hashfunktion ist.

10. Prozessor-Einrichtung nach einem der Ansprüche 7 bis 10 mit Algorithmus DES, wobei die weiteren Operationen eine oder mehrere der folgenden umfassen: Permutation P; Expansion E; Addition von linken und rechten Eingangs-Bits 1, r oder linken und expandierten rechten Eingangsbits l, r'.

11. Prozessor-Einrichtung nach Anspruch 7 mit Algorithmus AES, wobei als Eingabewert x ein Eingabewert oder Teil eines Eingabewerts einer AddRoundKey-Operation oder einer SubBytes-Operation oder einer inversen SubBytes-Operation einer AES-Runde vorgesehen ist.

12. Prozessor-Einrichtung nach Anspruch 7 oder 11 mit Algorithmus AES, wobei die weiteren Operationen eine oder mehrere der folgenden umfassen: MixColumn-Operation oder ein oder mehrere Teilschritte der MixColumn-Operation oder inverse MixColumn-Operation oder ein oder mehrere Teilschritte der inversen MixColumn-Operation.

13. Prozessor-Einrichtung nach einem der Ansprüche 1 bis 12, wobei die Verschleierungswerte y jeweils mittels einer Funktion V aus Bits des Eingabetexts berechnet sind, wobei insbesondere V wahlweise eine lineare Abbildung oder eine Hashfunktion ist.

14. Prozessor-Einrichtung nach Anspruch 9 oder 13, wobei der Algorithmus mehrere Runden aufweist und die Funktion V für jede Runde neu gewählt wird.

15. Prozessor-Einrichtung nach einem der Ansprüche 1 bis 14, wobei die Verschleierungswerte y weiter ein oder mehrere Zufallswerte y[x], insbesondere Zufallsbits, umfassen, welche zumindest einem oder jedem der Ausgabewerte s des Rechenschritts S hinzugefügt werden, wobei die Zufallswerte y[x] zunächst zufällig ausgewählt werden und anschließend so abgeändert werden, dass y[x] und s statistisch unabhängig sind.

16. Prozessor-Einrichtung nach einem der vorangehenden Ansprüche, wobei der Rechenschritt S dadurch als White Box maskierter Rechenschritt T' auf der Prozessor-Einrichtung implementiert worden ist, dass: (i) der Rechenschritt S durchgeführt worden ist, um Ausgabewerte s zu erzeugen, und (ii) auf die erzeugten Ausgabewerte s des Rechenschritts S und die Verschleierungswerte y die invertierbare Funktion f angewandt worden ist, und ein hierdurch erzieltes Ergebnis T' auf der Prozessor-Einrichtung implementiert worden ist.

**Claims**

1. A processor device having an executable white-box-masked implementation of a cryptographic algorithm implemented thereon that is configured to generate an output text from an input text while employing a secret key K, wherein the implementation comprises an implemented computation step S by which input values x are mapped to output values s = S[x], and which is masked to a white-box-masked computation step T' by means of an invertible function f, **characterized in that**
the invertible function f comprises an affine mapping A applied to the computation step S, said mapping being configured to generate output values w from A by applying A to output values s of the computation step S and additionally to one or several obfuscation values y which are statistically independent of the output values s of the computation step S, so that it holds that w = A(S[x], y) = A(s, y); and
the affine mapping A is further so adapted that every bit in the output values w of the affine mapping A depends on at least one bit of the obfuscation values y, thereby attaining that the output values w of the affine mapping A are statistically balanced.

2. The processor device according to claim 1, wherein the affine mapping A comprises a linear mapping which is formed by a matrix MA, which is organized in columns and rows, wherein the output values s of the computation step S and the statistically independent obfuscation values y are associated with separate columns in the matrix MA.

3. The processor device according to claim 2, wherein in each row of the matrix MA in at least one of the columns having statistically independent values y there is contained a non-zero value.

4. The processor device according to any of claims 1 to 3, wherein for carrying out the implementation of the white-box-masked computation step T' there has been supplied a look-up table STab[x] representing the computation step S, or a look-up table STab[x,y] representing the computation step S and the obfuscation values y.

5. The processor device according to any of claims 1 to 4, wherein the white-box-masked computation step T' is represented by a white-box-masked look-up table T'Tab [x, y] in which values f(s, y) are entered, in particular A(s, y).

6. The processor device according to any of claims 1 to 5, wherein the implementation additionally comprises a further invertible function g to be applied to input values x of the computation step S, or to input values x of the computation step S and to obfuscation values y according to $g^{-1}(x)$ or $g^{-1}(x, y)$.

7. The processor device according to any of claims 1 to 6, wherein there is provided as an algorithm a block cipher having several rounds, in particular DES or AES, and as a computation step S:

- one or several SBox operations or one or several inverse SBox operations, of respectively one round; or
- a combination of one or several SBox operations or one or several inverse SBox operations, of respectively one round, with one or several further operations of the round.

8. The processor device according to claim 7 having algorithm DES, wherein there is/are provided as an input value x either one or several expanded right entry bits r'i (r'1 | r'2 | ...) of a round, or a linkage (x = r'1 XOR k1 | r'2 XOR k2 | ...) of one or several expanded right entry bits r'i of a round with one or several key bits ki; or/and

- one or several left entry bits li of the round go into the obfuscation values y.

9. The processor device according to claim 7 or 8 having algorithm DES, wherein the obfuscation values y are computed by means of a function V from one or several left entry bits li of the round or/and from one or several expanded right entry bits r'i of the round, wherein, in particular, V is electively a linear mapping or a hash function.

10. The processor device according to any of claims 7 to 10 having algorithm DES, wherein the further operations comprise one or several of the following: permutation P; expansion E; addition of left and right entry bits 1, r or left and expanded right entry bits 1, r'.

11. The processor device according to claim 7 having algorithm AES, wherein there is provided as an input value x an input value or part of an input value of an AddRoundKey operation or a SubBytes operation or an inverse SubBytes operation of an AES round.

12. The processor device according to claim 7 or 11 having algorithm AES, wherein the further operations comprise one or several of the following: MixColumn operation or one or several substeps of the MixColumn operation or inverse MixColumn operation or one or several substeps of the inverse MixColumn operation.

13. The processor device according to any of claims 1 to 12, wherein the obfuscation values y are computed respectively by means of a function V from bits of the input text, wherein, in particular, V is electively a linear mapping or a hash function.

14. The processor device according to claim 9 or 13, wherein the algorithm has several rounds and the function V is newly chosen for every round.

15. The processor device according to any of claims 1 to 14, wherein the obfuscation values y further comprise one or several random values y[x], in particular random bits, which are added to at least one or all of the output values s of the computation step S, wherein the random values y[x] are first selected randomly and subsequently altered in such a manner that y[x] and s are statistically independent.

16. The processor device according to any of the preceding claims, wherein the computation step S has been implemented on the processor device as a white-box-masked computation step T' in that: (i) the computation step S has been carried out to generate output values s, and (ii) the invertible function f has been applied to the generated output values s of the computation step S and the obfuscation values y, and a thereby achieved result T' has been implemented on the processor device.

## Revendications

1. Dispositif à processeur sur lequel est implémentée une implémentation exécutable, masquée en boîte blanche, d'un algorithme cryptographique conçu pour, en utilisant une clé secrète K, générer à partir d'un texte en entrée un texte en sortie, cependant que l'implémentation comprend une étape de calcul S implémentée par laquelle des valeurs d'entrée x sont appliquées sur des valeurs de sortie s = S[x] et qui, au moyen d'une fonction inversible f, est masquée en une étape de calcul T' masquée en boîte blanche, **caractérisé en ce que**
la fonction inversible f comprend une application affine A utilisée dans l'étape de calcul S qui est conçue pour générer des valeurs de sortie w de A, ce qui a lieu **en ce que** A est utilisée sur des valeurs de sortie s de l'étape de calcul S et en plus sur une ou plusieurs des valeurs d'obfuscation y statistiquement indépendantes des valeurs de sortie s de l'étape de calcul S, de telle façon qu'il est établi que w = A(S[x], y) = A(s, y) ; et l'application affine A est en outre configurée de telle façon que chaque bit dans les valeurs de sortie w de l'application affine A dépend d'au moins un bit des valeurs d'obfuscation y, ce par quoi il est obtenu que les valeurs de sortie w de l'application affine A sont statistiquement équilibrées.

2. Dispositif à processeur selon la revendication 1, cependant que l'application affine A comprend une application linéaire constituée par une matrice MA qui est organisée en colonnes et en lignes, cependant que les valeurs de sortie s de l'étape de calcul S et les valeurs d'obfuscation y statistiquement indépendantes sont, dans la matrice MA, affectées à des colonnes séparées.

3.  Dispositif à processeur selon la revendication 2, cependant que, dans chaque ligne de la matrice MA, dans au moins une des colonnes à valeurs y statistiquement indépendantes, une valeur différente de zéro est contenue.

4.  Dispositif à processeur selon une des revendications de 1 à 3, cependant que, pour l'exécution de l'implémentation de l'étape de calcul T' masquée en boîte blanche, une table de consultation STab[x] représentant l'étape de calcul S ou une table de consultation STab[x,y] représentant l'étape de calcul S et les valeurs d'obfuscation y a été mise à disposition.

5.  Dispositif à processeur selon une des revendications de 1 à 4, cependant que l'étape de calcul T' masquée en boîte blanche est représentée par une table de. consultation T'Tab[x,y] masquée en boîte blanche dans laquelle des valeurs f(s,y) sont enregistrées, en particulier A(s,y).

6.  Dispositif à processeur selon une des revendications de 1 à 5, cependant que l'implémentation comprend en outre une autre fonction inversible g à utiliser sur des valeurs d'entrée x de l'étape de calcul S, ou sur des valeurs d'entrée x de l'étape de calcul S et des valeurs d'obfuscation y suivant $g^{-1}(x)$ ou $g^{-1}(x,y)$.

7.  Dispositif à processeur selon une des revendications de 1 à 6, cependant que, comme algorithme, un chiffre bloc à plusieurs rondes est prévu, en particulier DES ou AES, et que, comme étape de calcul S :

    - une ou plusieurs opérations Sbox ou une ou plusieurs opérations inverses Sbox, respectivement une ronde ; ou
    - une combinaison d'une ou de plusieurs opérations Sbox ou d'une ou de plusieurs opérations inverses Sbox, respectivement une ronde, avec une ou plusieurs autres opérations de la ronde.

8.  Dispositif à processeur selon la revendication 7 avec algorithme DES, cependant que, comme valeur d'entrée x, soit un ou plusieurs bits d'entrée droits étendus r'i (r'1 | r'2 | ...) d'une ronde, soit un lien (x = r'1 XOR k1 | r'2 XOR k2 | ... d'un ou de plusieurs bits d'entrée droits étendus r'i d'une ronde avec un ou plusieurs bits de clé ki est / sont prévus ; et / ou

    - qu'un ou plusieurs bit d'entrée gauches étendus li de la ronde entrent dans les valeurs d'obfuscation y.

9.  Dispositif à processeur selon la revendication 7 ou 8 avec algorithme DES, cependant que les valeurs d'obfuscation y sont calculées au moyen d'une fonction V d'un ou de plusieurs bits d'entrée gauches li de la ronde ou / et d'un ou de plusieurs bits d'entrée droits étendus r'i de la ronde, cependant que, en particulier, V est au choix une application linéaire ou une fonction de hachage.

10. Dispositif à processeur selon une des revendications de 7 à 10 avec algorithme DES, cependant que les autres opérations comprennent une ou plusieurs des suivantes : permutation P ; expansion E ; addition de bits d'entrée gauches et droits l, r ou de bits d'entrée gauches et droits étendus l, r'.

11. Dispositif à processeur selon la revendication 7 avec algorithme AES, cependant que, comme valeur d'entrée x, une valeur d'entrée ou partie d'une valeur d'entrée d'une opération AddRoundKey ou d'une opération SubBytes ou d'une opération inverse SubBytes d'une ronde AES est prévue.

12. Dispositif à processeur selon la revendication 7 ou 11 avec algorithme AES, cependant que les autres opérations comprennent une ou plusieurs des suivantes : opération MixColumn ou une ou plusieurs étapes partielles de l'opération MixColumn ou opération inverse MixColumn ou une ou plusieurs étapes partielles de l'opération inverse MixColumn.

13. Dispositif à processeur selon une des revendications de 1 à 12, cependant que les valeurs d'obfuscation y sont calculées respectivement au moyen d'une fonction V de bits du texte en entrée, cependant que, en particulier, V est au choix une application linéaire ou une fonction de hachage.

14. Dispositif à processeur selon la revendication 9 ou 13, cependant que l'algorithme comporte plusieurs rondes et que la fonction V est à nouveau choisie pour chaque ronde.

15. Dispositif à processeur selon une des revendications de 1 à 14, cependant que les valeurs d'obfuscation y comprennent en outre une ou plusieurs valeurs aléatoires y[x], en particulier des bits aléatoires, lesquels sont ajoutés à au moins une ou à chacune des valeurs de sortie s de l'étape de calcul S, cependant que les valeurs aléatoires y[x] sont tout d'abord choisies aléatoirement, puis ensuite modifiées de telle façon que y[x] et s sont statistiquement indépendants.

16. Dispositif à processeur selon une des revendications précédentes, cependant que l'étape de calcul S a été, sur le dispositif à processeur, implémentée en tant qu'étape de calcul T' masquée en boîte blanche par le fait que : (i) l'étape de calcul S a été exécutée afin de générer des valeurs de sortie s, et (ii) que, sur les valeurs de sortie s générées de l'étape de calcul S et sur les valeurs d'obfuscation y, la fonction inversible f a été utilisée, et qu'un résultat T' ainsi obtenu a été implémenté sur le dispositif à processeur.

Fig. 1

Fig. 2

$$\text{y}\boxed{l_{2i}l_{2i+1}} \qquad \text{x}\boxed{r'_{6i}\cdots r'_{6i+5}}$$

Ti

$$S_i(-\oplus k_i^j) \qquad E^{-1}$$

$$\boxed{P}$$

y     s

xor

$$R_i^{j+1} \qquad\qquad L_i^{j+1}$$

$$-\|-$$

$$\boxed{L_i^{j+1}\|R_i^{j+1}\ (64\ \text{bit})}$$

$$R^{j+1} = \bigoplus_{i=0}^{9} R_i^{j+1}, \quad L^{j+1} = \bigoplus_{i=0}^{9} L_i^{j+1} \qquad \textbf{Fig. 3}$$

Multiplikation der Matrix der linearen Abbildung $A$ mit einem Datenvektor:

$$w = T'(s,y) \qquad\qquad A = MA \qquad\qquad (s,y) = (S(x),y)$$

$$\begin{pmatrix} \sigma_0 \\ \vdots \\ \sigma_{l-1} \end{pmatrix} = \left(\begin{array}{ccc|ccc} a_{0,0} & \cdots & a_{0,n-1} & a_{0,n} & \cdots & a_{0,n+m-1} \\ \vdots & & \vdots & \vdots & & \vdots \\ a_{l-1,0} & \cdots & a_{l-1,n-1} & a_{l-1,n} & \cdots & a_{l-1,n+m-1} \end{array}\right) \cdot \begin{pmatrix} s_0 \\ \vdots \\ s_{n-1} \\ y_0 \\ \vdots \\ y_{m-1} \end{pmatrix}$$

$$\underbrace{\qquad\qquad\qquad}_{\substack{\text{Spalten mit Koeffizien-}\\\text{ten der } s_j.}} \qquad \underbrace{\qquad\qquad\qquad}_{\substack{\text{Spalten mit Koeffizien-}\\\text{ten der } y_j.}}$$

Jedes $\sigma_i$ ist eine Linearkombination der $s_j$ und $y_j$:

$$\sigma_i = \sum_{j=0}^{n-1} a_{i,j} s_j + \sum_{j=0}^{m-1} a_{i,n+j} y_j$$

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014016548

- WO 102014016548 A

**In der Beschreibung aufgeführte Nicht-Patentliteratur**

- **JAMES A. MUIR.** A Tutorial on White-box AES. *Cryptology ePrint Archive*
- **J.W. BOS ; CH. HUBAIN ; W. MICHIELS ; PH. TEUWEN.** *Differential Computation Analysis: Hiding your White-Box Designs is Not Enough*

- **J.W. BOS ; CH. HUBAIN ; W. MICHIELS ; PH. TEUWEN.** *Differential Computation Analysis: Hiding your White-Box Designs is Not Enough,* 31. Juli 2015